## Europäisches Patentamt
## European Patent Office
## Office européen des brevets

(19)

(11) Veröffentlichungsnummer: **0 000 115**
A1

(12)

# EUROPÄISCHE PATENTANMELDUNG

(21) Anmeldenummer: **78100016.1**

(22) Anmeldetag: **01.06.78**

(51) Int. Cl.²: **F 16 H 57/02, C 21 C 5/50**

(30) Priorität: **05.07.77 AT 4777/77**

(43) Veröffentlichungstag der Anmeldung:
**10.01.79 Patentblatt 79/1**

(84) Benannte Vertragsstaaten:
**BE DE FR GB LU SE**

(71) Anmelder: **Vereinigte Österreichische Eisen - und Stahlwerke - Alpine Montan AG,
Werksgelände,
A-4010 Linz (AT)**

(72) Erfinder: **Riegler, Ernst,
Grollerstrasse 5,
A-4470 Enns (AT)**

(72) Erfinder: **Schmidt, Manfred,
Heilhamerstrasse 5,
A-4020 Linz (AT)**

(74) Vertreter: **Glawe, Richard, Dr. et al,
Postfach 37,
D-8000 München 26 (DE)**

(54) **Kippantrieb für Konverter.**

(57) Bei Kippantrieben für Konverter mit einem Großrad (7), welches an einem Kippzapfen (3) des Konverters befestigt ist, greifen mindestens zwei von einem gemeinsamen Motor (16) angetriebene und durch eine Welle (23, 24) verbundene Ritzel (11, 12) in das Großrad (7) ein.

Um einen solchen Kippantrieb einerseits bei Verwendung von nur zwei Ritzeln unterhalb der Arbeitsbühne in platzsparender Weise anordnen zu können und anderseits für schwere Antriebe, die mehr als zwei Ritzel aufweisen, vorzusehen, sind die Ritzel (11, 12) in einem am Kippzapfen (3) fliegend gelagerten, tragenden Getriebegehäuse (8) in einer Position außerhalb der durch die Kippachse (13) des Konverters (1) gehenden Horizontalebene (15) gelagert.

FIG.1

EP 0 000 115 A1

- 1 -

## Kippantrieb für Konverter

Die Erfindung betrifft einen Kippantrieb für Konverter mit einem am Kippzapfen befestigten Großrad, an dem mindestens zwei von einem gemeinsamen Motor angetriebene und durch eine Welle verbundene Ritzel eingreifen.

- 2 -

Es sind bereits Kippantriebe dieser Art, die sogenannten Bogiflex-Antriebe, bekannt, bei welchen jedes Ritzel mittels eines an einem Innenflansch des Großrades geführten Wagens gelagert ist, u.zw. diametral einander gegenüber in der durch die Kippzapfenachse gehenden Horizontalebene. Die Wagen sind durch ein Gestänge zusammengehalten und jeder Wagen ist durch ein Gestänge gegen das Fundament drehmomentengestützt. Diese bekannte Anordnung hat den Nachteil, daß nur zwei Ritzel am Großrad in der beschriebenen diametralen Anordnung vorgesehen werden können, was für schwere Antriebe nicht ausreicht. Für schwere Antriebe zur Übertragung von großen Drehmomenten werden mehr als zwei Ritzel benötigt. Ein anderer Nachteil der diametralen Anordnung bei schwächeren Antrieben ist der, daß die Ritzel, die Halteeinrichtung und das Gestänge relativ hoch über der Arbeitsbühne liegen und den Platz beschränken.

Die Erfindung bezweckt die Vermeidung der geschilderten Nachteile und Schwierigkeiten und stellt sich die Aufgabe, einen Kippantrieb mit mindestens zwei Antriebsritzeln und Leistungsverzweigung zu schaffen, der einerseits, wenn nur zwei Ritzel erforderlich sind, unterhalb der Arbeitsbühne in platzsparender Weise angeordnet werden kann, und anderseits bei schweren Antrieben auch mehr als zwei Ritzel aufweisen kann. Weiters bezweckt die Erfindung eine kompakte, betriebs- und störungssichere Bauart.

Die Aufgabe wird dadurch gelöst, daß die Ritzel in einem am Kippzapfen fliegend gelagerten, tragenden Getriebegehäuse in einer Position außerhalb der durch die Kippachse des Konverters gehenden Horizontalebene gelagert sind.

Weitere Vorteile, die auf diese Weise erreicht werden, sind eine Abkapselung gegen äußere Einflüsse (Staub usw.), und die Möglichkeit, eine Umlaufschmierung mit Öl anstatt einer Fettschmierung verwenden zu können.

Nach einer bevorzugten Ausführungsform sind zwei Ritzel unterhalb der durch die Kippachse gehenden Horizontalebene einander gegenüberliegend in dem Getriebegehäuse gelagert, wobei der Antriebsmotor am Fundament angeordnet ist und jeweils über ein Kegelgetriebe mit je einem Ritzel verbunden ist.

Dabei ist zweckmäßig der Antriebsmotor über jeweils mindestens eine drehelastische Welle mit je einem Ritzel verbunden, wodurch die Zahnspiele jeder Antriebskette ausgeglichen werden, so daß beide Ritzel an der Drehmomentenübertragung einen gleich großen Anteil haben.

Vorteilhaft sind die beiden Ritzel über jeweils ein am Getriebegehäuse um die jeweilige Ritzelachse schwenkbar gelagertes Vorgelege angetrieben, wobei die Vorgelege aneinander bewegungsgekoppelt sind, beispielsweise über eine Kugelpfannenlagerung oder eine Verzahnung und wobei die Kegelgetriebe jeweils über eine Gelenkwelle mit den Vorgelegen antriebsmäßig verbunden sind. Dadurch werden die Zahnspiele durch eine Bewegung der Vorgelege gegenüber dem Getriebegehäuse ausgeglichen.

Nach einer weiteren bevorzugten Ausführungsform sind unterhalb und oberhalb der durch die Kippachse gehenden Horizontalebene jeweils zwei einander gegenüberliegende Ritzel angeordnet, wobei die übereinander angeordneten Ritzel durch drehelastische Wellen verbunden sind.

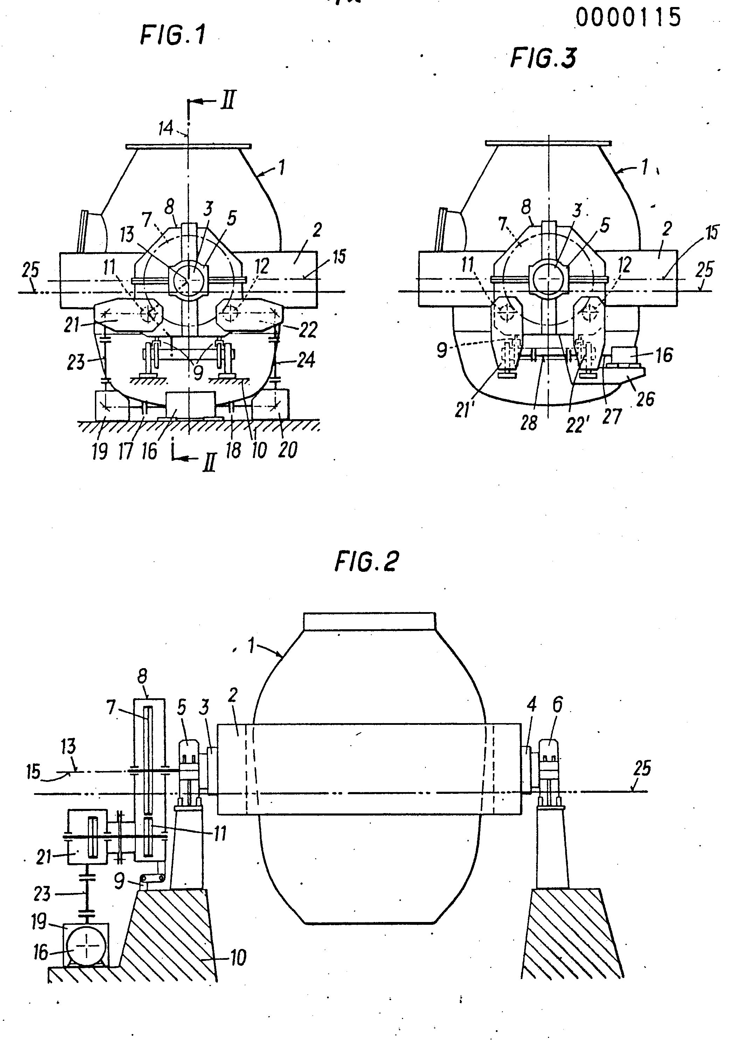

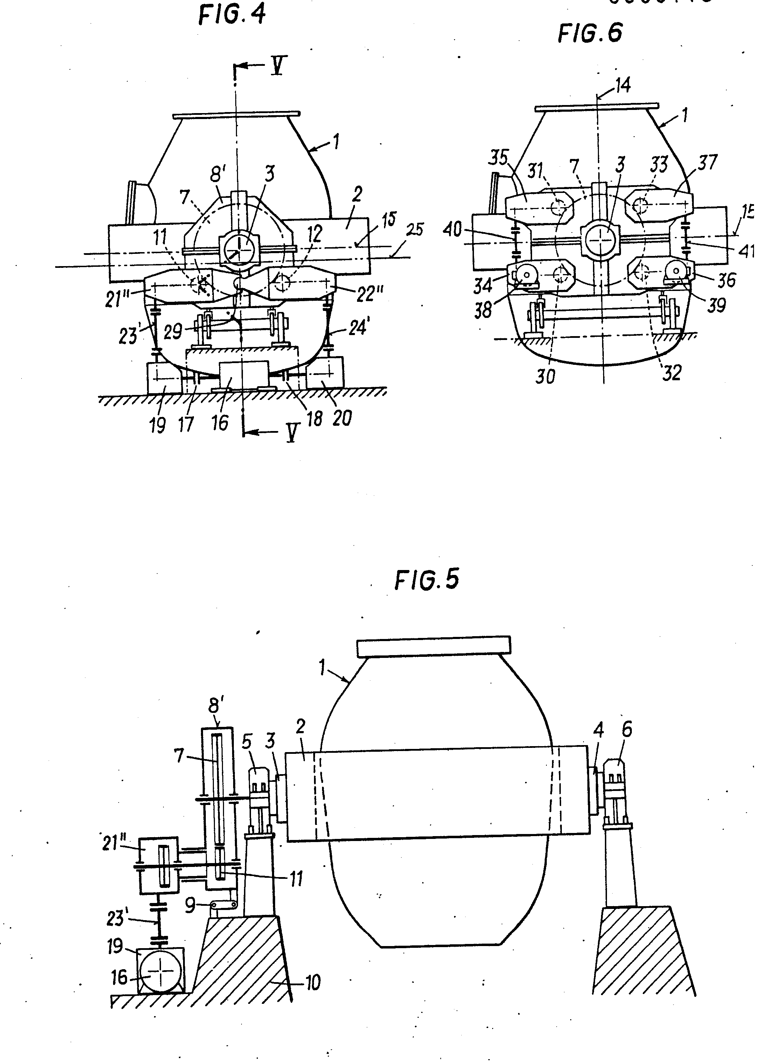

Die Erfindung ist anhand mehrerer Ausführungsformen in der Zeichnung näher erläutert, wobei die Fig. 1, 3 und 4 jeweils eine Ausführungsform eines Kippantriebes mit zwei Antriebsritzel in schematischer Darstellung in Seitenansicht zeigen. Fig. 6 stellt eine Ausführungsform eines schweren Antriebes mit vier Antriebsritzel ebenfalls in Seitenansicht dar. Die Fig. 2 und 5 zeigen gemäß den Linien II-II bzw. V-V der Fig. 1 und 4 geführte Schnitte.

Mit 1 ist ein Konverter bezeichnet, der in einem Tragring 2 eingesetzt ist. Der Tragring ist mit Kippzapfen 3, 4, die in Lagern 5, 6 gelagert sind, drehfest verbunden. Der Kippzapfen 3 ist über das Lager 5 hinaus verlängert. An seinem Ende ist ein Großrad 7 drehfest aufgezogen. Das Großrad ist in einem Getriebegehäuse 8, welches über eine Drehmomentenstütze 9 am Fundament 10 abgestützt und am Kippzapfen 3 fliegend gelagert ist, eingesetzt.

Zwei Ritzel 11, 12 sind symmetrisch zur durch die Kippachse 13 des Konverters gelegten Vertikalebene 14 und unterhalb der ebenfalls durch die Kippachse 13 gelegten Horizontalebene15 mit dem Großrad 7 kämmend im Getriebegehäuse 8 gelagert.

Die beiden Ritzel 11, 12 werden von einem einzigen Antriebsmotor 16, der vorteilhaft ein Drehstrommotor ist, gemeinsam angetrieben. Der Antriebsmotor 16 ist am Fundament 10 angeordnet und treibt über die beiden Kupplungen 17, 18 und weiters über die beiden Kegelgetriebe 19, 20 jeweils ein einem Ritzel vorgeschaltetes Vorgelege 21, 22 an. Zwischen jedem Kegelgetriebe 19, 20 und jedem Vorgelege 21, 22 ist eine drehelastische Welle 23, 24 vorgesehen, deren Verdrehelastizität jeweils größer ist als die Summe der Zahnspiele einer Antriebskette ausgehend vom Motor 16 bis zum Großrad 7.

Wie aus Fig. 1 ersichtlich ist, liegen die Vorgelege jeweils unterhalb der mit 25 bezeichneten Arbeitsbühne, sodaß diese außer durch das Getriebegehäuse 8 durch keinerlei Antriebselemente platzmäßig beschränkt ist. Gemäß Fig. 3 ist der Antriebsmotor an einer am Getriebegehäuse 8 befestigten Konsole 26 angeordnet. Der Antrieb erfolgt vom Antriebsmotor über eine Welle 27 zu dem Vorgelege 22' und von diesem über eine drehelastische Welle 28 zum zweiten Vorgelege 21'.

Gemäß dem in den Fig. 4 und 5 dargestellten Ausführungsbeispiel sind die Vorgelege 21", 22", bei sonst gleicher Ausführung wie in Fig. 1 dargestellt, am Getriebegehäuse 8' um die Achsen der Ritzel 11, 12 schwenkbar gelagert und miteinander durch eine Kugelpfannenlagerung 29 gekoppelt, wodurch die Zahnspiele jeder Antriebskette durch eine gegenläufige Drehbewegung der Vorgelege 21", 22" gegenüber dem Getriebegehäuse 8 ausgeglichen werden können. Anstelle der Kugelpfannenlagerung könnte auch eine andere Koppelung der Vorgelege 21" und 22" vorgesehen sein, beispielsweise eine Verzahnung. Zwischen den Kegelgetrieben und den Vorgelegen braucht keine drehelastische Welle vorgesehen zu sein. In diesem Fall genügen einfache Gelenkwellen.

In Fig. 6 ist ein Kippantrieb für besonders schwere Konverter dargestellt, bei dem vier Ritzel 30, 31, 32, 33 vorgesehen sind, welche symmetrisch zur jeweils durch die Kippachse gelegten Vertikal- 14 und Horizontalebene 15 angeordnet sind. Jedes der Ritzel ist mit einem am Getriebegehäuse angeflanschten Vorgelege 34 bis 37 versehen, wobei die jeweils übereinander liegenden Vorgelege 34,35 bzw. 36, 37 mittels eines am Getriebegehäuse 8 befestigten Antriebsmotors 38, 39 antreibbar sind. Jeder der Antriebsmotoren 38, 39 ist zunächst direkt an einem Vorgelege 34, 36 angeflanscht, welches Vorgelege 34 bzw. 36 über eine drehelastische Welle 40 bzw. 41 mit dem darüber angeordneten Vorgelege 35 bzw. 37 antriebsmäßig verbunden ist.

Patentansprüche:

1.     Kippantrieb für Konverter mit einem am Kippzapfen
befestigten Großrad, an dem mindestens zwei von einem gemeinsamen Motor angetriebene und durch eine Welle verbundene Ritzel
eingreifen, dadurch gekennzeichnet, daß die Ritzel (11, 12;
30 bis 33) in einem am Kippzapfen (3) fliegend gelagerten,
tragenden Getriebegehäuse (8) in einer Position außerhalb der
durch die Kippachse (13) des Konverters (1) gehenden Horizontalebene (15) gelagert sind.

2.     Kippantrieb nach Anspruch 1, dadurch gekennzeichnet,
daß zwei Ritzel (11, 12) unterhalb der durch die Kippachse (13)
gehenden Horizontalebene (15) einander gegenüberliegend in dem
Getriebegehäuse (8) gelagert sind, wobei der Antriebsmotor (16)
am Fundament (10) angeordnet ist und jeweils über ein Kegelgetriebe (19, 20) mit je einem Ritzel (11, 12) verbunden ist.

3.     Kippantrieb nach Anspruch 2, dadurch gekennzeichnet,
daß der Antriebsmotor (16) über jeweils mindestens eine drehelastische Welle (23, 24) mit je einem Ritzel (11, 12) verbunden
ist.

4.     Kippantrieb nach Anspruch 2, dadurch gekennzeichnet,
daß die beiden Ritzel (11, 12) über jeweils ein am Getriebegehäuse (8) um die jeweilige Ritzelachse schwenkbar gelagertes Vorgelege (21", 22") angetrieben sind, wobei die Vorgelege (21",
22") aneinander bewegungsgekoppelt sind, beispielsweise über
eine Kugelpfannenlagerung (29) oder eine Verzahnung und wobei
die Kegelgetriebe (19, 20) jeweils über eine Gelenkwelle (23',
24') mit den Vorgelegen (21", 22") antriebsmäßig verbunden sind.

5.     Kippantrieb nach Anspruch 1, dadurch gekennzeichnet,
daß unterhalb und oberhalb der durch die Kippachse (13) gehenden Horizontalebene (15) jeweils zwei einander gegenüberliegende Ritzel (30 bis 33) angeordnet sind, wobei die übereinander angeordneten Ritzel (30, 31 bzw. 32, 33) durch drehelastische Wellen (40, 41) verbunden sind.

FIG.1

FIG.3

FIG.2

FIG.4

FIG.6

FIG.5

| Kategorie | Kennzeichnung des Dokuments mit Angabe, soweit erforderlich, der maßgeblichen Teile | betrifft Anspruch |
|-----------|-----|-----|
| X | <u>FR - A - 2 124 996</u> (WESTDEUTSCHE GE-TRIEBEWERKE)<br><br>* Patentansprüche 1-8; Figur 4; Seite 4, Zeile 14 * | 1 |
| | <u>FR - A - 2 192 252</u> (WGW WESTDEUTSCHE GETRIEBE- UND KUPPLUNGSWERKE)<br><br>* Patentansprüche 1-4; Figuren 1,2 * | 1 |
| | <u>FR - A - 2 176 458</u> (WGW WESTDEUTSCHE GETRIEBE-UND KUPPLUNGSWERKE)<br><br>* Patentansprüche 1-7; Figuren 1-4 * | 1,2 |
| | <u>DE - A - 1 650 848</u> (SIMMERING-GRAZ-PAUKER)<br><br>* Patentansprüche 1-4; Figuren 1-7 * | 1,5 |
| | <u>FR - A - 1 302 840</u> (DEMAG)<br><br>* Figur 2; Seite 2, rechte Spalte, Zeilen 21-48 * | 1 |
| | <u>US - A - 3 381 509</u> (PIERRE GAY)<br><br>* Figuren 1-4; Seite 2, linke Spalte, Zeilen 35-55 * | 1,2 |
| | <u>FR - A - 1 305 474</u> (F.DURAND)<br><br>* Patentanspruch; Figur * | 4 |
| A | <u>DE - A - 2 018 251</u> (DEMAG)<br><br>* Figuren 3,4; Patentansprüche 1-3 *<br><br>./. | 1 |

KLASSIFIKATION DER ANMELDUNG (Int Cl³)

F 16 H 57/02
C 21 C 5/50

RECHERCHIERTE SACHGEBIETE (Int. Cl³)

F 16 H 57/02
C 21 C 5/50
C 21 C 5/46
B 61 D 9/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|-----|-----|
| Den Haag | 03-10-1978 | ELSEN |

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | US – A – 3 364 773 (M.C.FALK) <br> * Figuren 1-5; Patentansprüche 1-19 * | 1 | |
| | | | **RECHERCHIERTE SACHGEBIETE (Int. Cl.²)** |